# FASCICULE DE BREVET EUROPEEN

(11) **EP 0 462 932 B1**
(45) Date de publication et mention de la délivrance du brevet: **29.12.1993**
(21) Numéro de dépôt: 91810454.8
(22) Date de dépôt: 14.06.1991
(51) Int. Cl.: G01N 3/08, B23Q 1/26, F16C 29/00, A24C 5/343

(54) **Procédé et dispositif de contrôle de mouvement**
Verfahren und Einrichtung zur Steuerung einer Bewegung
Method and apparatus for controlling a movement

(30) Priorité: 20.06.1990 CH 2059/90
(43) Date de publication de la demande: 27.12.1991
(73) Titulaire: FABRIQUES DE TABAC REUNIES S.A., 2003 Neuchâtel-Serrières (CH)
(72) Inventeur: Mussini, Gian Piero, CH-2610 St. Imier (CH); Higgins, Charles Thomas, Richmond, Virginia 23229 (US)
(74) Mandataire: Fischer, Franz Josef

(56) Documents cités:
- EP-A- 0 195 173
- WO-A-88/06271

## Description

Un dispositif de contrôle de la compressibilité d'articles de l'industrie du tabac faisant l'objet de la demande de brevet EP-0 195 173 a été développé et est couramment utilisé dans une fabrique de tabac; ce dispositif permet de mesurer la compressibilité d'un lot de cigarettes disposées dans un support ad-hoc, par l'intermédiaire de la mesure du déplacement vertical d'une charge constante. Lors de l'application de la charge, celle-ci se déplace verticalement sur deux coulisses de précision au fur et à mesure de l'écrasement des cigarettes. La précision et la répétibilité de la mesure dépendent, entre autre, de l'état d'usure des coulisses le long desquelles la charge se déplace; en effet une coulisse usée, ou présentant un défaut localisé ne permettant pas un déplacement régulier et uniforme de la charge, peut amener à des imprécisions de mesure.

Afin d'éviter les ambiguïtés de termes, le dispositif de contrôle de la compressibilité d'articles de l'industrie du tabac mentionné ci-dessus, sera désormais appelé appareil de mesure de la compressibilité, l'expression dispositif de contrôle étant réservée au dispositif selon la présente invention.

Le contrôle de l'état des coulisses de l'appareil de mesure de la compressibilité n'est pas évident; il s'agit en effet de reproduire aussi fidèlement que possible les conditions d'essai et d'être sûr que les paramètres mesurés sont bien représentatifs de l'état des coulisses. De plus, le contrôle doit être reproductible, soit indiquer les mêmes défauts lors de plusieurs essais successifs sur le même appareil et les résultats doivent être indépendants de l'opérateur et du lieu d'essai. Enfin, le contrôle doit être dynamique et représenter l'état des coulisses en fonctionnement dans la zone de travail lors d'une mesure de compressibilité.

Un contrôle effectué en remplaçant le support contenant les cigarettes par un ressort ne permet pas d'obtenir les résultats escomptés, puisque les défauts de la caractéristique du ressort, pouvant être du même ordre de grandeur que ceux des coulisses, s'ajoutent à ces derniers; il est ensuite difficile de distinguer ces deux types de défauts sur le graphique de mesure. De même, en disposant un objet pâteux, de compressibilité connue, on obtient des résultats dépendant fortement des conditions ambiantes (température-humidité) ainsi que du vieillissement de la pâte, ce qui fait qu'il est difficile de comparer deux appareils dans deux laboratoires différents.

La demande PCT WO 88/06271 décrit un procédé et un dispositif permettant de déterminer la précision géométrique d'une glissière rectiligne. Pour ceci, l'auteur propose une cellule de mesure comportant une pluralité de capteurs relevant les positions instantanées selon plusieurs axes d'un chariot se déplaçant le long de la glissière. L'inconvénient de ce dispositif est qu'il nécessite plusieurs capteurs, délivrant plusieurs mesures, qu'il s'agit ensuite d'interpréter les unes par rapport aux autres. D'autre part, la coulisse n'est pas testée exactement selon ses conditions d'utilisation, c'est-à-dire que la mesure est faite "à vide" et non pas sous des conditions reproduisant exactement les conditions d'utilisation normale de l'appareil.

Pour pallier à ces inconvénients, un procédé ainsi qu'un dispositif, répondant aux caractéristiques mentionnées dans les parties caractérisantes des revendications, ont été développés.

Le procédé et le dispositif de contrôle sont décrits appliqués au contrôle des coulisses d'un appareil de mesure de la compressibilité de cigarettes, mais il est bien entendu que le procédé et le dispositif s'appliquent tout aussi bien à d'autres sortes d'appareils ou de machines comportant une ou plusieurs coulisses sur lesquelles un objet se déplace sous l'effet d'une force constante.

Le procédé et le dispositif, selon une forme d'exécution préférentielle de l'invention, se comprennent aisément par la description correspondant au dessin avec les figures où:
la figure 1 représente le dispositif selon l'invention placé sur un appareil de mesure de la compressibilité de cigarettes,
la figure 2 représente une vue de côté à plus grande échelle d'un dispositif selon l'invention, et
la figure 3 représente deux diagrammes, celui de la figure 3A étant un enregistrement fait lors d'un contrôle de coulisses en bon état, alors que la figure 3B correspond à un enregistrement fait lors du contrôle de coulisses en mauvais état.

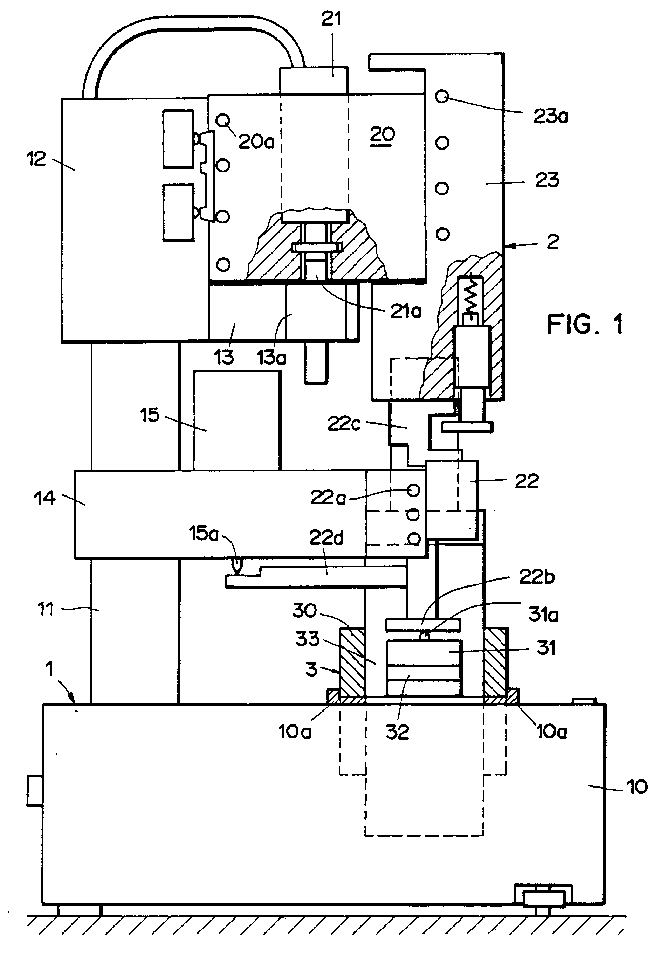

L'appareil de mesure de la compressibilité de cigarettes 1 représenté sur la figure 1 est composé principalement d'une embase 10, comportant les rails de guidage 10a, d'un pilier vertical 11, d'un bloc supérieur 12 auquel un bras supérieur 13 est fixé et d'un bras intermédiaire 14 qui constituent les principaux éléments fixes de l'appareil. Les éléments mobiles 2 sont constitués principalement d'un bloc de commande 20, pouvant se déplacer verticalement par rapport au bloc supérieur 12, par l'action du moteur 21 dont l'axe fileté 21a est engagé dans l'écrou 13a faisant partie du bras supérieur 13. Le coulissement du bloc de commande 20 sur le bloc supérieur 12, se fait par l'intermédiaire de la coulisse à billes 20a. Une première charge 22, coulissant verticalement le long du bras intermédiaire 14 par la coulisse à bille 22a, comporte le plateau d'appui 22b agissant sur l'objet en essai ainsi que des moyens d'accrochage et d'appui 22c reliant cette première charge 22 à la charge principale 23 qui coulisse verticalement le long du bloc de commande 20 par la coulisse à billes 23a. Un doigt latéral 22d, fixé à la première charge 22, agit sur la pointe 15a d'un comparateur 15 afin de mesurer le déplacement vertical du plateau d'appui 22b. Les autres éléments ainsi que le fonctionnement de cet appareil pour une mesure de compressibilité de cigarettes sont décrits dans le brevet mentionné plus haut; ils ne seront donc pas davantage décrits ici. Afin d'assurer une mesure de compressibilité juste et répétitive, il est essentiel que les charges 22 et 23 se déplacent régulièrement, sans jeu et sans à-coups, le long des coulisses 22a et 23a. Le dispositif de contrôle des coulisses 3 se place sur l'embase 10, son support de base 30 en aluminium étant guidé par les rails de guidage 10a, en lieu et place du support portant les cigarettes dont la compressibilité est à mesurer.

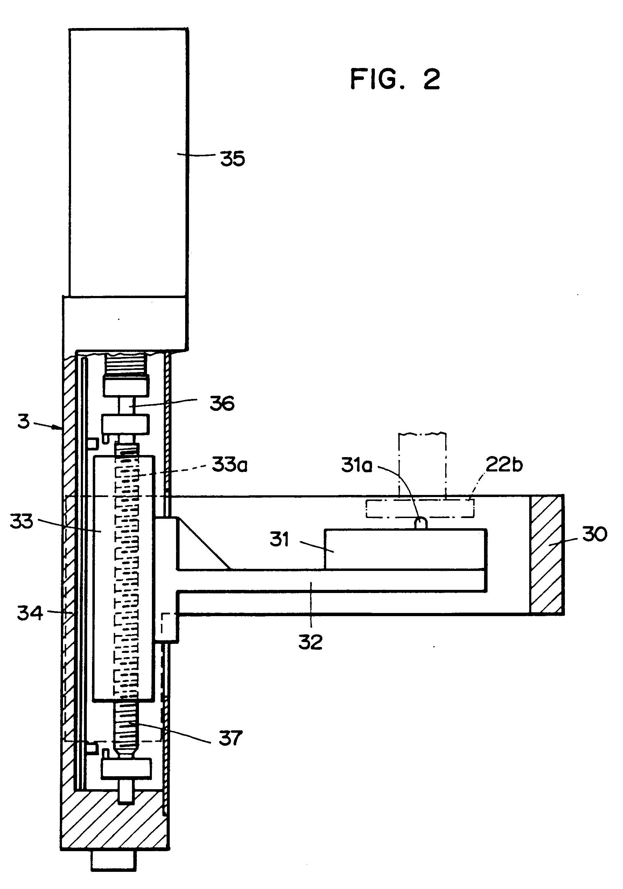

Le détail de la constitution du dispositif de contrôle est plus particulièrement visible sur la figure 2. Le support de base 30 est constitué d'un cadre creux de forme rectangulaire; la surface de base de ce support est usinée avec grande précision de manière à s'adapter exactement aux rails de guidage 10a afin que le reste des éléments du dispositif de contrôle 3 soient exactement positionnés pour remplir correctement leurs fonctions. A l'intérieur de ce cadre rectangulaire formant support de base 30, une cellule de mesure de forces 31, pouvant être de manière préférentielle une cellule HBM Z11, comportant une pointe de touche 31a, est suspendue à une équerre 32, elle-même reliée de manière rigide à une coulisse motorisée 33. Cette coulisse 33 a un mouvement vertical et est guidée avec précision à l'intérieur d'un châssis 34; un moteur à courant continu 35, actionnant en rotation, dans un sens ou dans l'autre, l'axe 36 fileté sur son extrémité 37, entraîne la coulisse 33 selon un mouvement rectiligne vertical par l'intermédiaire d'une partie taraudée 33a traversant ladite coulisse et engagée sur l'extrémité taraudée 37. De manière préférentielle, le moteur 35, le châssis 34 et la coulisse 33 seront constitués en un seul élément de précision, par exemple une coulisse motorisée de Micro-Controle. Ainsi, en alimentant le moteur 35 avec une tension positive ou négative, il est possible de faire tourner l'axe 36, respectivement sa partie filetée 37, dans un sens ou dans l'autre, ce qui par effet de vissage ou de dévissage de la partie taraudée 33a de la coulisse 33 entraîne celle-ci dans un mouvement vertical vers le haut ou vers le bas, entraînant dans le même mouvement l'équerre 32 et la cellule de mesure de forces 31.

Le procédé ainsi que le fonctionnement du dispositif de contrôle de l'état des coulisses selon l'invention, peuvent maintenant être décrits.

L'appareil de mesure de la compressibilité est tout d'abord amené en position de départ, soit le bloc de commande 20 en position haute, les charges 22 et 23 y étant suspendues par leurs moyens de suspension adéquats. Vu qu'ainsi le plateau d'appui 22b est lui aussi en position haute, il est facile de retirer le support à cigarettes et d'introduire à sa place le dispositif de contrôle 3 sur l'embase 10, en le guidant par les rails de guidage 10a. En actionnant le moteur 35, la cellule de mesure est aussi amenée en position de départ, respectivement en position haute, toutefois sans amener la pointe de touche 31a en contact avec le plateau d'appui 22b, ceci afin de protéger la cellule de mesure 31 et éviter qu'une charge trop importante ne lui soit appliquée. Le bloc de commande 20 est maintenant commandé en descente, amenant le plateau 22b en contact avec la pointe de touche 31a, ce qui fait que ladite pointe de touche, respectivement la cellule de mesure supporte tout d'abord la première charge 22 puis la charge principale 23, soit une masse totale de 1500 gr. Ces charges sont immobilisées par la cellule de mesure 31 alors que le bloc de commande 20 continue sa course vers le bas afin de se dégager complètement de la charge principale 23. La position d'arrêt du bloc de commande sera choisie telle que lors de la descente ultérieure de la charge, celle-ci ne soit jamais retenue par ledit bloc de commande et que le bloc de commande n'appuie pas sur la charge. Cette position est celle représentée à la figure 1. Puis une tension contrôlée est appliquée au moteur 35, lui imposant un mouvement de rotation absolument régulier, imposant respectivement à la coulisse 33 et à la cellule 31 un mouvement de translation vers le bas absolument régulier; le déplacement du plateau 22b est mesuré par le comparateur 15 fournissant un signal électrique proportionnel audit déplacement, alors que la force appliquée par le plateau 22b est mesurée par la cellule de mesure 31; ces deux signaux électriques sont envoyés à une unité de traitement, non représentée, qui établit un diagramme représentant la force mesurée en fonction du déplacement. Il est important que les coulisses soient contrôlées en tout cas dans la zone dans laquelle se fait la mesure de compressibilité; pour ceci, depuis le point de départ mentionné ci-dessus, la charge est tout d'abord abaissée de environ 1,8 mm , endroit où la pleine échelle de 1500 gr est réglée; lorsque la course atteint 2 mm, l'échelle du déplacement est remise à zéro puis la mesure est faite de la force appliquée à la cellule 31 en fonction du déplacement mesuré par le comparateur 15, ceci sur 5 mm de course. Lorsque la coulisse 33 a atteint sa position inférieure, le déplacement vers le bas du dispositif est stoppé, le bloc de commande 20 est commandé à la montée afin de relever les charges 22 et 23 de la cellule de mesure 31.

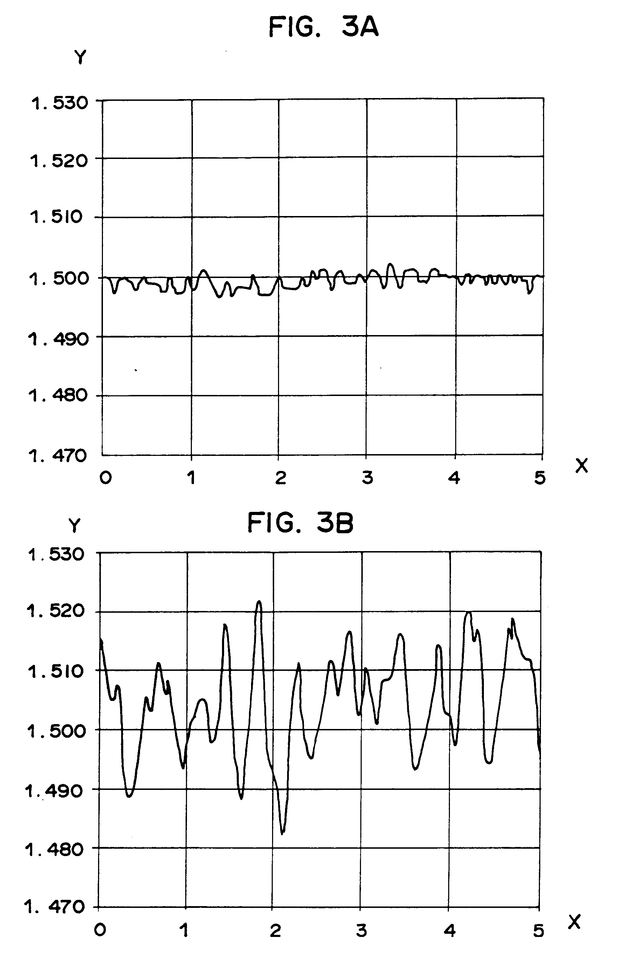

Des exemples de graphiques obtenus via l'unité de traitement sont représentés aux figures 3A et 3B, où on a en abscisse (axe X) le déplacement mesuré par le comparateur 15, de 0 à 5 mm, et en ordonnée (axe Y) la charge correspondant à une masse en gr. mesurée par la cellule 31 lors dudit déplacement. Une mesure de charge est faite tous les µm, la moyenne de 5 mesures consécutives étant reportée sur le graphique. Dans le cas où le déplacement des charges 22 et 23 le long des coulisses 22a et 23a se fait sans à-coups, soit lorsque lesdites coulisses sont en bon état, les valeurs mesurées de la charge ne s'écartent que de très peu de la valeur nominale de 1500 gr correspondant à la charge totale; ce cas est représenté à la figure 3A où la variation de charge est comprise entre + 2 gr et - 3 gr. Dans le cas où des irrégularités ou des défauts sur l'une ou l'autre des coulisses 22a et 23a imposent des à-coups au déplacement des charges, on obtient un graphique semblable à celui représenté à la figure 3B où la variation maximum de charge est de + 22 gr à - 18 gr. Il est évident que de telles variations dans la zone de mesure fausseraient complètement une mesure de compressibilité.

L'unité de traitement mentionnée plus haut, non représentée sur le dessin, commande automatiquement ou manuellement les différentes étapes du contrôle, recueille les signaux de mesure, les traite et établit le graphique témoin de la mesure. Cette unité de traitement peut être séparée ou au contraire associée à l'unité de commande de l'appareil de mesure de la compressibilité.

Ainsi, par le procédé et à l'aide du dispositif de contrôle selon l'invention, il est possible de rapidement contrôler la qualité des coulisses de l'appareil de mesure de la compressibilité, afin de s'assurer que les valeurs de compressibilité indiquées correspondent vraiment aux valeurs mesurées. Pour ceci, il est nécessaire d'admettre une valeur limite lors du contrôle, par exemple ± 5 gr, au-delà de laquelle l'appareil de mesure est réputé défectueux, après éventuellement un deuxième contrôle de confirmation, et doit être révisé. Un seul dispositif de contrôle peut servir au contrôle de nombreux appareils de mesure de la compressibilité, que ceux-ci soient installés dans un seul laboratoire ou dans plusieurs laboratoires pouvant être éloignés les uns des autres; en d'autres termes le contrôle des coulisses est indépendant de l'appareil mesuré ainsi que des conditions ambiantes environnantes.

Un tel procédé peut être prévu pour le contrôle de mouvement d'autres types d'appareils de mesure que celui décrit; par exemple un appareil de mesure de dureté peut aussi être testé par ce procédé, un dispositif de contrôle adéquat étant installé à la place de la pièce à mesurer. De manière plus générale, la régularité du déplacement de toute pièce ayant un mouvement rectiligne peut être contrôlée selon le procédé de l'invention, à condition que ce mouvement soit provoqué par l'application d'une force constante à ladite pièce.

## Revendications

1. Procédé de contrôle de la régularité du mouvement selon un déplacement rectiligne d'un objet (22, 23) guidé par des moyens de guidage (22a, 23a) sur des moyens de support (14, 20), ledit mouvement étant provoqué par l'application d'une force constante audit objet, caractérisé en ce qu'une cellule de mesure de force (31), se déplaçant selon la même direction que ledit objet, mesure la force qui lui est appliquée par l'objet en fonction du déplacement dudit objet le long desdits moyens de guidage.

2. Procédé de contrôle de la régularité du mouvement selon un déplacement rectiligne d'un objet (22, 23) guidé par des coulisses verticales (22a, 23a) sur des moyens de support (14, 20) d'un appareil de mesure de la compressibilité d'articles de l'industrie du tabac (1), ledit mouvement étant provoqué par l'application de la force de gravité audit objet, caractérisé en ce qu'une cellule de mesure de force (31), se déplaçant selon la même direction que ledit objet, mesure la force qui lui est appliquée par l'objet en fonction du déplacement dudit objet le long desdites coulisses verticales.

3. Dispositif de contrôle de la régularité du mouvement selon un déplacement rectiligne d'un objet (22, 23) guidé par des moyens de guidage (22a, 23a) sur des moyens de support (14, 20), ledit mouvement étant provoqué par l'application d'une force constante audit objet, pour l'application du procédé selon la revendication 1 ou 2, caractérisé en ce qu'il comprend une cellule de mesure de force (31) montée sur une coulisse motorisée (33), se déplaçant selon la même direction que ledit objet en mouvement, ladite coulisse motorisée imposant un mouvement rectiligne régulier à ladite cellule de mesure de force.

4. Dispositif selon la revendication 3, caractérisé en ce qu'il comprend en outre une unité de commande apte à commander les différentes étapes du contrôle, à actionner (35) la coulisse motorisée (33), à recueillir les signaux électriques provenant de la cellule de mesure de force (31) ainsi que d'un comparateur de mesure du déplacement (15), puis à traiter ces signaux pour établir un graphique témoin du contrôle.

5. Dispositif selon la revendication 4, caractérisé en ce que la variation de la force mesurée en fonction du déplacement de l'objet (22, 23) sur une ou plusieurs coulisses (22a, 23a) indique l'état d'usure de la ou des coulisses.

6. Dispositif selon la revendication 3, caractérisé en ce qu'il comprend un cadre (30) dans lequel est montée ladite coulisse motorisée (33) supportant ladite cellule de mesure de force (31), et en ce que ledit cadre est disposé en lieu et place d'un support contenant habituellement les articles de l'industrie du tabac, respectivement les cigarettes à mesurer.

## Patentansprüche

1. Verfahren zur Steuerung der Gleichmässigkeit einer Bewegung bei einer geradlinigen Verschiebung eines Gegenstandes (22, 23), geführt durch Führungsmittel (22a, 23a) auf Trägermitteln (14, 20) , wobei die genannte Bewegung durch die Aufbringung einer konstanten Kraft auf den genannten Gegenstand bewirkt wird, dadurch gekennzeichnet, dass eine Messzelle (31) zur Messung der Kraft, die sich in der gleichen Richtung wie der genannte Gegenstand verschiebt, die Kraft misst, welche auf diese durch den genannten Gegenstand in Funktion der Verschiebung des genannten Gegenstandes entlang der genannten Führungsmittel ausgeübt wird.

2. Verfahren zur Steuerung der Gleichmässigkeit einer Bewegung bei einer geradlinigen Verschiebung eines Gegenstandes (22, 23), geführt durch vertikale Führungen (22a, 23a) auf Trägermitteln (14, 20) einer Einrichtung (1) zur Messung der Kompressibilität von Artikeln der Tabakindustrie, wobei die genannte Bewegung durch die Wirkung der Gravitationskraft auf den genannten Gegenstand hervorgerufen wird, dadurch gekennzeichnet, dass eine Messzelle (31) zur Messung der Kraft, die sich in der gleichen Richtung wie der genannte Gegenstand verschiebt, die Kraft misst, welche auf diese durch den genannten Gegenstand in Funktion der Verschiebung des genannten Gegenstandes entlang der genannten vertikalen Führungen ausgeübt wird.

3. Einrichtung zur Steuerung der Gleichmässigkeit einer Bewegung bei einer geradlinigen Verschiebung eines Gegenstandes (22, 23), geführt durch Führungsmittel (22a, 23a) auf Trägermitteln (14, 20), wobei die genannte Bewegung durch die Aufbringung einer konstanten Kraft auf den genannten Gegenstand bewirkt wird, zur Durchfüh- rung des Verfahrens nach einem der Ansprüche 1 oder 2, dadurch gekennzeichnet, dass eine Zelle (31) zur Messung der Kraft vorgesehen ist, die auf einer motorisierten Führung (33) befestigt ist, und die in der gleichen Richtung verschiebbar ist, wie der genannte bewegte Gegenstand, wobei die motorisierte Führung eine geradlinige, gleichmässige Bewegung der genannten Zelle zur Messung der Kraft bewirkt.

4. Einrichtung nach Anspruch 3, dadurch gekennzeichnet, dass unter anderem eine Steuereinheit vorgesehen ist, die fähig ist, die unterschiedlichen Steuerungsabschnitte zu steuern, die motorisierte Führung (33) zu betätigen (35), die elektrischen Signale zu empfangen, die von der Zelle (31) zur Messung der Kraft sowie von einem Koparator (15) zur Messung der Verschiebung ausgehen, wonach diese Signale zur Erstellung einer Vergleichsgrafik zur Kontrolle verarbeitet werden.

5. Einrichtung nach Anspruch 4, dadurch gekennzeichnet, dass die Veränderung der in Funktion der Verschiebung des Gegenstandes (22, 23) auf einer oder mehreren Führungen (22a, 23a) gemessenen Kraft den Zustand des Verschleisses der Führung oder der Führungen anzeigt.

6. Einrichtung nach Anspruch 3, dadurch gekennzeichnet, dass ein Rahmen (30) vorgesehen ist, in welchem die genannte motorisierte Führung (33) befestigt ist, die die genannte Zelle (31) zur Messung der Kraft trägt, und dass der genannte Rahmen anstelle eines Trägers, der gewöhnlich die Artikel der Tabakindustrie bzw. die zu messenden Zigaretten enthält, angebracht ist.

## Claims

1. Method of checking the regularity of a movement according to a rectilinear displacement of an object (22, 23) guided by guide means (22a, 23a) on support means (14, 20), the said movement being caused by the application of a constant force to said object wherein a force-measurement cell (31), being displaced in the same direction as the said object, measures the force which is applied to it by the object as a function of the displacement of the said object along the said guide means.

2. Method of checking the regularity of a movement according to a rectilinear displacement of an object (22, 23) guided by vertical slides (22a, 23a) on support means (14, 20) of an apparatus for measuring the compressibility of articles of the tobacco industry (1), the said movement being caused by the application of the force of gravity on the said object, wherein a force-measurement cell (31), being displaced in the same direction as the said object, measures the force which is applied to it by the object on the basis of the displacement of the said object along the said vertical slides.

3. Apparatus for checking the regularity of movement according to a rectilinear displacement of an object (22, 23) guided by vertical slides (22a, 23a) on support means (14, 20), the said movement being caused by the application of a constant force on the said object, for application of the method according to claim 1 or 2, wherein it comprises a force-measurement cell (31) mounted on a motorized slide (33), being displaced in the same direction as the said object in movement, the said motorized slide imposing a regular rectilinear movement on the said force-measurement cell.

4. Apparatus according to claim 3, wherein it includes in addition a control unit capable of controlling the different stages of checking, for actuating (35) the motorized slide (33), for collecting the electric signals provided by the force-measurement cell (31) as well as of the comparator (15) for measuring displacement then processing these signals to establish a graphic monitor of control.

5. Apparatus according to claim 4, wherein the variation of the force measured as a function of the displacement of the object (22, 23) on one or several slides (22a, 23a) indicates the state of wear and tear of the one or more slides.

6. Apparatus according to claim 3, wherein it includes a frame (30) in which the said motorized slide (33) is mounted supporting the said force-measurement cell (31), and wherein the said frame is disposed in place of a support usually containing the articles of the tobacco industry, respectively cigarettes, to be measured.
